Europäisches Patentamt

European Patent Office

Office européen des brevets

(11) Veröffentlichungsnummer: **0 277 332**
**A1**

(12) **EUROPÄISCHE PATENTANMELDUNG**

(21) Anmeldenummer: 87118803.3

(22) Anmeldetag: 18.12.87

(51) Int. Cl.4: **H01M 4/00** , H01M 4/98 ,
H01M 4/86 , C25B 11/03

(30) Priorität: 24.01.87 DE 3702138

(43) Veröffentlichungstag der Anmeldung:
10.08.88 Patentblatt 88/32

(84) Benannte Vertragsstaaten:
CH DE FR GB LI NL SE

(71) Anmelder: VARTA Batterie Aktiengesellschaft
Am Leineufer 51
D-3000 Hannover 21(DE)

(72) Erfinder: Winsel, August, Prof. Dr. Dipl.-Phys.
Fasanenstrasse 8a
D-6233 Kelkheim(DE)

(74) Vertreter: Kaiser, Dieter Ralf, Dipl.-Ing.
Gundelhardtstrasse 72
D-6233 Kelkheim/Ts.(DE)

(54) Elektrode mit Speichervermögen für Wasserstoff zur Durchführung von elektrochemischen und chemischen Reaktionen.

(57) Eine $H_2$-Elektrode, die neben gutem Speicher-vermögen für Wasserstoff auch noch durch - schnellen Gasaustausch mit dem Elektrolyten bei wechselnder Polarisation hohe Leistungsfähigkeit be-sitzt, ist aus Raney-Nickel und einer $H_2$-Speicherle-gierung gebildet, die als Pulver zusammen mit PTFE als Bindemittel einem intensiven Mischprozeß unter-worfen und durch Einwalzen in ein Metallnetz, z.B. aus Nickel oder Kupfer, zu einer Elektrodenstruktur verdichtet werden. Eine solche Elektrode kann in alkalischen Akkumulatoren oder Brennstoffzellen die herkömmlichen negativen Elektroden ersetzen, aber ebenso bei chemischen Reaktionen, z.B. bei einer Hydrierung oder der Nitratreduktion mit $H_2$, die Rolle eines Katalysators übernehmen.

EP 0 277 332 A1

## Elektrode mit Speichervermögen für Wasserstoff zur Durchführung von elektrochemischen und chemischen Reaktionen

Die Erfindung betrifft eine Elektrode mit Speichervermögen für Wasserstoff zur Durchführung von elektrochemischen und chemischen Reaktionen sowie ein Verfahren zu ihrer Herstellung.

Aus der DE-OS 3 342 969 ist eine poröse Gaselektrode zur kathodischen $H_2$-Abscheidung und anodischen $H_2$-Auflösung bekannt, die aus Raney-Nickel mit ca. 5 - 10% PTFE als Binder besteht. Zu ihrer Herstellung wird Raney-Nickel-Pulver in konservierter Form mit PTFE-Pulver in einem Schaufelmischer gemischt und die Mischung der gleichzeitigen Einwirkung eines Schneidkopfes mit schnell rotierenden scharfen Messern ausgesetzt. Die fertige Mischung wird darauf in einer Pulverwalze zu einer Folie ausgewalzt und die Folie schließlich zusammen mit einem Nickelnetz oder einem Streckmetall derart zusammengewalzt, daß es die Maschen des Netzes erfüllt und mit dem Netz zusammen ein elektronisch leitendes Gerüst bildet.

Bringt man diese Elektrode als Trennwand zwischen KOH als Elektrolyt und $H_2$-Gas in einer elektrochemischen Zelle an und unterwirft sie abwechselnd einer anodischen und einer kathodischen Polarisation, so findet man ein sehr günstiges kinetisches Verhalten, das sich zum einen in einem linearen Polarisationsspannung/Stromdichte-Verhältnis äußert, zum anderen aber auch durch einen hohen Gasumsatz, insbesondere $H_2$-Verzehr bei anodischer Polung, ausgeprägt ist.

Es sind andererseits sogenannte kunststoffgebundene $H_2$-Speicherelektroden bekannt, die beispielsweise gemäß DE-OS 27 27 200 aus dem Pulver einer $H_2$-Speicherlegierung, etwa des Systems Nickel-Titan oder Nickel-Lanthan, und PTFE als Binder in einem Knetprozeß hergestellt werden. Indem somit die Körner der $H_2$-Speicherlegierung an die Stelle des Raney-Nickels treten, besteht hinsichtlich des Aufbaus Ähnlichkeit mit dem Typ der vorbeschriebenen Gaselektrode.

Unterwirft man eine solche $H_2$-Speicherelektrode jedoch dem gleichen Funktionstest wie oben, zeigen sich im kinetischen Verhalten deutliche Unterschie de. Zwar läßb sich die $H_2$-Speicherlegierung noch wirksamer zur elektrochemischen Ladungsspeicherung benutzen, als dies schon mit der Raney-Nickel-Leigierung möglich ist, indem man $H_2$ kathodisch entwickelt und in das Titan-Nickel-Gitter einbaut und bei Bedarf durch Stromumkehr wieder entnimmt. Mit dieser verbesserten spezifischen Speicherkapazität geht aber eine verschlechterte Leistungsfähigkeit, d.h. ein - schleppender Gasumsatz, einher. Dieser Befund könnte damit erklärt werden. daß sich durch den Einsatz der unporösen Speicherlegierungs-Körner zwar der $H_2$-Austausch zwischen Gas und Legierung verbessert hat, jedoch der Elektrolyt wegen des unporösen und hydrophoben Charakters nur noch wenig in die Elektrodenstruktur eindringen kann. Daran liegt es, daß der elektrochemische Austausch zwischen Elektrolytlösung und Legierungsphase nicht mehr einwandfrei funktioniert.

Der Erfindung liegt daher die Aufgabe zugrunde, eine $H_2$-Elektrode verfügbar zu machen, die sowohl eine gute Speicherkapazität für den Wasserstoff besitzt als auch befähigt ist, Wasserstoffgas kathodisch rasch zu entwickeln und anodisch rasch aufzulösen.

Die Aufgabe wird erfindungsgemäß mit den im kennzeichnenden Teil des Anspruchs 1 angegebenen Mitteln gelöst.

Danach läßt sich der erwähnte Mangel beseitigen, indem man die Elektrode aus einer Pulvermischung, bestehend aus pulverförmiger $H_2$-Speicherlegierung und Raney-Nickel-Pulver, herstellt. Der Mischvorgang selbst entspricht dabei der eingangs beschriebenen, aus der DE-OS 3 342 969 an sich bekannten Verfahrensweise, modifiziert aber dadurch, daß das Mischgut neben dem PTFE-Pulver jetzt aus Raney-Nickel und einer $H_2$-Speicherlegierung, beispielsweise zu etwa gleichen Teilen, besteht. Anstelle von nur einer $H_2$-Speicherlegierung können auch mehrere verschiedene intermetallische Verbindungen mit reversibler Speicherfähigkeit für Wasserstoff, die zahlreich bekannt sind, eingesetzt werden.

Für den Mischprozeß unter dem gleichzeitigen Einfluß einer schnellaufenden Messer-Mühle ist von Bedeutung, daß die Pulverkörner des Mischgutes sich mit dem PTFE, das sogar teilweise verdampft, fibrillenartig überziehen, weshalb dieser Vorgang auch als "reactive mixing" bezeichnet wird.

Durch anschließendes Pressen und Walzen unter hohem Druck wird die Mischung dann, gegebenenfalls in den Maschen eines Streckmetalls oder Metallnetzes, für die sich vorzugsweise Nickel und Kupfer eignen, zu einer zusammenhängenden Elektrodenstruktur verdichtet. Diese erweist sich für das elektrische Verhalten als besonders günstig.

Stellt man nämlich mit der erfindungsgemäßen Elektrode wiederum eine Trennwand zwischen Elektrolyt und einem $H_2$-Gasraum in einer elektrochemischen Zelle her, so bilden sich innerhalb des Elektrodenkörpers zwei sich durchdringende Porensysteme aus, von denen das eine den Elektrolyt enthält und aus den Packungslücken zwischen den Raney-Nickel-Körnern und den Körnern

der $H_2$-Speicherlegierung besteht. Das zweite Porensystem wird aus den zusammenhängenden Zwickelräumen der Raney-Nickel-Körner gebildet und durch die hydrophobierende Wirkung der über die Raney-Nickel-Körner beim reactive mixing gezogenen PTFE-Fäden vom Elektrolyten nicht überflutet; daher enthält dieses Porensystem das Reaktionsgas $H_2$. Die hydrophilen Raney-Nickel-Körner mit ihrem schwammartigen Porensystem dagegen saugen sich im Kontakt mit dem Elektrolyten mit diesem voll und stellen die elektrolytische Verbindung zu den benachbarten Legierungskörnern her. Sie vermitteln auf diese Weise das Wasserangebot zur kathodischen $H_2$-Entwicklung in die Legierung hinein wie auch umgekehrt das OH -Ionenangebot bei der elektrochemischen Oxidation des gespeicherten $H_2$ der Legierung zu Wasser. Dabei vermitteln sie gleichzeitig den elektronischen Kontakt, tragen mit ihrer eigenen Speicherfähigkeit zum Speicherergebnis bei und begünstigen infolge ihrer großen katalytischen Aktivität die $H_2$-Beladung und -Entladung der Speicherlegierung.

Das Mischungsverhältnis des Raney-Nickels zur Speicherlegierung kann in weiten Grenzen variiert werden. Selbst Anteile von nur 10% der Raney-Nickel-Komponente erhöhen die Leistungsfähigkeit der erfindungsgemäßen Speicherelektrode.

Besonders günstig ist es, wenn die Elektrode in den oberflächennahen Bereichen einen höheren Raney-Nickel-Pulveranteil als in den oberflächenfernen Bereichen enthält, da dann das Raney-Nickel die elektrochemische Umsetzung des $H_2$ übernimmt, während die Speicherung von den Legierungskörnern in der Nachbarschaft aus der Gasphase heraus erfolgt.

Diese Maßnahme kommt außerdem dem Ziel einer guten Elektrolytversorgung der tieferliegenden Kornbereiche der Speicherlegierung entgegen, bei welcher die Korngrößenverteilung der verwendeten Pulver von großen Einfluß is. Aber selbst bei 1 mm dicken Elektroden, die aus volumengleichen Pulvermengen hergestellt sind, hat man noch eine ausreichende Versorgung.

An der Raktion der $H_2$-Elektrode ist nur das Wasser des Elektrolyten beteiligt. Konzentrationsunterschiede, die im alkalischen Elektrolyten der Raney-Nickel-Körner aufgrund der Reaktion auftreten können, werden durch Wasseraustausch über die Gasphase mit dem Zellelektrolyten ausgeglichen. Die hydrophoben Elektrodenbereiche tragen daher nicht nur zur $H_2$-Versorgung und -Entsorgung der elektrochemischen Bereiche bei, sondern auch zur Regulierung des Wasserhaushalts über die Gasphase.

In besonders vorteilhafter Weist wirkt sich in der erfindungsgemäßen Elektrode das herstellungsbedingte PTFE-Gespinst, das die Raney-Nickel-und die Speicherlegierungskörner netzartig umschließt, dadurch aus, daß es einen allseitigen Kontaktdruck auf die Körner ausübt und sie vor einem Zerfall bewahrt. Denn die mit der elektrochemischen $H_2$-Beladung und -Entladung einhergehenden Ausdehnungs-und Kontraktionsvorgänge können das Volumen der Körner um bis zu 30% verändern, was sich in einer Kornzerfallsneigung der $H_2$-Speicherlegierungen äußert. Die bisher gebräuchliche Maßnahme, um die mechanischen und elektrischen Eigenschaften von $H_2$-Speicherelektroden zu verbessern, bestand in einer wesentlich umständlicheren Temperaturbehandlung des gepreßten Metallpulvers in reduzierender oder inerter Atmosphäre. Damit verfolgte man das Ziel, die Kontaktzonen, die man beim Pressen von Metallpulvern zwischen diesen und den Ableitermaterialien erhält, zu erweitern.

Einsatzgebiet der erfindungsgemäßen Elektrode ist besonders die Batterietechnik. So kann die $H_2$-Speicherelektrode in an sich bekannter Weise als negative Elktrode die Cadmium-Elektrode in Nickel-Cadmium-Zellen ersetzen. Zusammen mit einer positiven Nickelhydroxid-Elektrode bildet sie im alkalischen Elektrolyten einen alkalischen Akkumulator, der in gasdichter Ausführung mit einer in Lade-und Entladerichtung begrenzenden positiven Elektrode sowohl überlade-als auch überentladesicher ist.

Ein weiteres Anwendungsgebiet der erfindungsgemäßen Elektrode ist die Brennstoffzellentechnik. Zusammen mit einer Sauerstoff-oder Luftelektrode bildet sie eine bei $H_2$-Zufuhr kontinuierlich arbeitende Brennstoffzelle, die durch ihre eigene Speicherwirkung besonders gegen Lastspitzen unempfindlich ist.

Die Elktrode kann jodoch auch in Ni/$H_2$-Zellen eingesetzt werden, die gepaart mit einer positiven Elektrode des Nickelhydroxidtyps zusätzlich die Speicherwirkung des Druckgases ausnutzen und bei Systemdrucken bis 80 bar betrieben werden.

Schlieblich kann die Elektrode als Katalysatorstruktur in Reaktoren zur Durchführung von Hydrierungs-oder auch Dehydrierungsreaktionen benutzt werden, z.G. zur katalytischen Nitratreduktion mit $H_2$, wie sie von Raney-Nickel her bekannt ist, jedoch auch zur Hydrierung in einer Anordnung, bei der das Hydriergut mit der mit $H_2$-versorgten Elektrode unter Aufrechterhaltung einer ausreichenden Relativgeschwindigkeit in Kontakt gebracht wird.

## Ansprüche

1. Elektrode mit Speichervermögen für Wasserstoff zur Durchführung von elektrochemischen und chemischen Reaktionen, dadurch gekennzeichnet, daß sie aus einer Mischung aus Raney-Nickel-Pulver und dem Pulver mindestens einer $H_2$-Speicherlegierung besteht, deren Körner mit fibrilliertem PTFE überzogen sind, wobei die Raney-Nickel-und Legierungskörner durch Walzen oder Pressen derartig verdichtet sind, daß sie einen zusammenhängenden elektronisch leitenden Körper bilden und durch das in den Zwickeln befindliche PTFE-Fibrillen-Netzwerk zusammengehalten werden.

2. Elektrode nach Anspruch 1, dadurch gekennzeichnet, daß die mit PTFE-gebundene Mischmasse aus Raney-Nickel und Speicherlegierungspulver in den Maschen eines Streckmetalls oder eines Metallnetzes, vorzugsweise aus Nickel oder Kupfer, festgelegt ist.

3. Elektrode nach den Ansprüchen 1 und 2, dadurch gekennzeichnet, daß sie in den oberflächennahen Bereichen einen höheren Raney-Nickel-Pulveranteil als in den oberflächenfernen Bereichen enthält.

4. Verfahren zur Herstellung einer Elektrode nach den Ansprüchen 1 bis 3, dadurch gekennzeichnet, daß pulverförmiges Raney-Nickel mit dem Pulver einer $H_2$-Speicherlegierung und PTFE-Pulver unter der gleichzeitigen Einwirkung schnell rotierender Messer gemischt wird und die Mischung durch Pressen und Walzen unter hohem Druck zu einer zusammenhängenden Elektrodenstruktur, gegebenenfalls in den Maschen eines Streckmetalls oder Metallnetzes, verdichtet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 621 417 (M. MOHRI et al.) * Ansprüche 1,2,5,7,8,10,12; Spalte 3, Zeilen 40-53; Spalte 4, Zeile 5 - Spalte 6, Zeile 12 * | 1,2,4 | H 01 M 4/00 H 01 M 4/98 H 01 M 4/86 C 25 B 11/03 |
| Y | --- | 4 | |
| D,Y | EP-A-0 144 002 (VARTA BATTERIE) * Ansprüche 1,5,8,9 * --- | 4 | |
| Y | GB-A-2 162 994 (SANYO ELECTRIC CO.) * Seite 3, Zeilen 4-9; Seite 6, Zeilen 10-16; Anspruch 5 * --- | 4 | |
| Y | PATENT ABSTRACTS OF JAPAN, Band 11, Nr. 11 (E-470)[2458], 13. Januar 1987; & JP-A-61 185 863 (TOSHIBA CORP.) 19-08-1986 * Insgesamt * --- | 4 | |
| Y | PATENT ABSTRACTS OF JAPAN, Band 10, Nr. 233 (E-427)[2289], 13. August 1986; & JP-A-61 66 372 (SANYO ELECTRIC CO. LTD) 05-04-1986 * Insgesamt * --- | 4 | RECHERCHIERTE SACHGEBIETE (Int. Cl.4) H 01 M C 25 B |
| A | FR-A-1 296 372 (ACCUMULATOREN FABRIK AG) --- | | |
| A | US-A-3 620 844 (E. WICKE et al.) --- | | |
| A | EP-A-0 089 141 (INCO RESEARCH & DEVELOPMENT CENTER, INC.) ----- | | |

Der vorliegende Recherchenbericht wurde für alle Patentansprüche erstellt

| Recherchenort | Abschlußdatum der Recherche | Prüfer |
|---|---|---|
| DEN HAAG | 29-04-1988 | D'HONDT J.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument